# EUROPÄISCHE PATENTSCHRIFT

(11) **EP 1 972 802 B1**
(45) Veröffentlichungstag und Bekanntmachung des Hinweises auf die Patenterteilung: **06.10.2010**
(21) Anmeldenummer: 08152139.5
(22) Anmeldetag: 29.02.2008
(51) Int. Cl.: F16C 19/38, F16C 43/06

(54) **Schrägrollenlager**
Inclined roller bearing
Roulement à rouleaux oblique

(30) Priorität: 23.03.2007 DE 102007013944
(43) Veröffentlichungstag der Anmeldung: 24.09.2008
(73) Patentinhaber: Schaeffler Technologies GmbH & Co. KG, 91074 Herzogenaurach (DE)
(72) Erfinder: Oetjen, Jürgen, 91074 Herzogenaurach (DE)
(74) Vertreter: Becker, Bodo

(56) Entgegenhaltungen:
- DE-C- 649 218
- US-A- 2 055 714
- US-A- 3 948 578

## Beschreibung

### Anwendungsgebiet der Erfindung

Die Erfindung betrifft ein zweireihiges Schrägrollenlager, welches aus einem äußeren Lagerring und einem inneren Lagerring sowie aus einer Anzahl zwischen den Lagerringen in zwei Reihen nebeneinander angeordneter zylindrischer Wälzkörper besteht, die zueinander in O-Anordnung angestellt sind und auf Laufbahnen abwälzen, welche unter einem Winkel geneigt zu einer Lagerachse verlaufen, wobei jede Wälzkörperreihe mit einer außerhalb der Laufbahn liegenden Einfüllöffnung versehen ist, deren Mittelachse eine Verlängerung von Rotationsachsen der Wälzkörper ist und beide Einfüllöffnungen nach dem Einfüllen der Wälzkörper durch einen Füllstopfen verschlossen sind.

### Hintergrund der Erfindung

Zweireihige Schrägrollenlager kommen immer dann zur Anwendung, wenn auf gleichem Bauraum zweireihige Schrägkugellager oder auch ein Kreuzrollenlager nicht mehr die notwendigen Kräfte (Lebensdauer) oder Momente (Kippsteifigkeit) übertragen können. Eine typische Ausführungsform derartiger Lager geht aus dem SKF-Katalog 3135 T "RKS Schwenklager", Seite 96 hervor. Diese zweireihig ausgebildeten Schwenklager haben einteilige Ringe. Die Rollen aus einem Wälzlagerstahl werden durch eine gemeinsame Einfüllöffnung in einem Lagerring in das Lager eingeschoben, wobei die Einfüllöffnung nach dem Einbringen der Wälzkörper mit einem Stopfen zu verschließen ist.

Nachteilig dabei ist, dass die Einfüllöffnung Bestandteil der Laufbahn ist. Dies hat zur Folge, dass der die Einfüllöffnung zu verschließende Füllstopfen ebenso aufwendig zu behandeln ist wie die Laufbahn. Dieser Füllstopfen muss daher auch gehärtet und überschliffen werden. Darüber hinaus bildet ein solcher Füllstopfen eine Stoßkante für die Wälzkörper, sodass Geräusche oder Schwingungen vorprogrammiert sind. Für bestimmte Anwendungsfälle, zum Beispiel in der Medizintechnik, sind aber sehr geräusch- und stoßarme Lagerungen ein unbedingtes Erfordernis. Ein weiterer Nachteil ist darin begründet, dass der die

Laufbahn verschließende Füllstopfen gesichert werden muss, was wiederum eine relativ große radiale Ausdehnung des Lagerringes bewirkt. Es ist weiter von Nachteil, dass der Füllstopfen den Abstand beider Laufbahnen zueinander begrenzt, da dieser umso breiter werden muss, je weiter die Laufbahnen in axialer Richtung voneinander entfernt sind.

Ein zweireihiges Schrägrollenlager mit den Merkmalen des Oberbegriffs von Anspruch 1 ist beispielsweise aus der US 3,948,578 A bekannt. Dieses Lager umfasst zwei jeweils einteilige Lagerringe, wobei jeder Lagerring sowohl belastete, als Wälzlagerlaufbahnen fungierende Oberflächenbereiche, als auch nicht belastete Oberflächenbereiche aufweist. Zur Befüllung mit Wälzörpern weist einer der Lagerringe eine Befüllöffnung in einem nicht belasteten Oberflächenbereich auf.

Ein weiteres zweireihiges Schrägrollenlager ist aus der US 2,055,714 A bekannt. Auch in diesem Fall sind Befüllöffnungen für die Befüllung mit zylindrischen Wälzkörpern vorgesehen. Die Befüllöffnungen sind als zur Symmetrieachse eines Wälzkörpers konzentrische Kanäle ausgebildet.

### Zusammenfassung der Erfindung

Ausgehend davon liegt der Erfindung daher die Aufgabe zugrunde, ein gattungsgemäßes Schrägrollenlager so weiter zu entwickeln, dass einerseits das Laufverhalten verbessert und andererseits eine weitere Miniaturisierung des Lagers möglich ist.

Erfindungsgemäß wird diese Aufgabe nach dem kennzeichnenden Teil von Anspruch 1 in Verbindung mit dessen Oberbegriff dadurch gelöst, dass jede Wälzkörperreihe mit einer außerhalb der Laufbahn liegenden Einfüllöffnung versehen ist, deren Mittelachse eine Verlängerung von Rotationsachsen der Wälzkörper ist und beide Einfüllöffnungen nach dem Einfüllen der Wälzkörper durch einen Füllstopfen verschlossen sind.

Der entscheidende Vorteil der erfindungsgemäßen Lösung liegt darin, dass die Füllstopfen nicht mehr Bestandteil der Laufbahnen sind. Dadurch verringert sich der Fertigungsaufwand wesentlich, da die verwendeten Füllstopfen keine Laufbahnqualitäten aufweisen müssen. Auch werden die Laufeigenschaften des Lagers verbessert, da die Laufbahnen nicht mehr unterbrochen sind und daher das Lager sehr stoß- und geräuscharm arbeitet. Durch das Wegfallen der Fixierung des Füllstopfens in einem der Lagerringe kann dieser auch in seiner radialen Ausdehnung verringert werden, was sich insbesondere vorteilhaft bei mangelndem Bauraum auswirkt. Es ist weiter von Vorteil, dass im Gegensatz zum bisherigen Stand der Technik eine Verbreiterung des axialen Abstandes beider Laufbahnen voneinander ohne Probleme möglich ist, da dies ohne Einfluss auf den Füllstopfen ist, da dieser, wie bereits ausgeführt, nicht mehr Bestandteil der Laufbahnen ist.

Gemäß einer nicht beanspruchten Bauform eines zweireihigen Schrägrollenlagers ist der Füllstopfen eine Kunststoffkugel, die mit Übermaß in die Einfüllöffnung eingepresst ist. Derartige Kunststoffkugeln sind als billiges Zukaufteil in den verschiedensten Materialzusammensetzung und Größenverhältnissen auf dem Markt erstehbar und daher besonders kostengünstig. Der Verschluss der Einfüllöffnungen durch die Stopfen sorgt dafür, dass einerseits kein Schmutz von außen nach innen in das Lager eindringen kann und dass andererseits kein Schmiermittel aus dem Lager von innen nach außen gelangen kann.

Bei dem erfindungsgemäßen Schrägrollenlager soll der Füllstopfen als ein spanlos gefertigtes Zentrierlager ausgebildet sein, welches aus einer Hülse besteht, deren Boden einen Kugelkranz aufnimmt, dessen mittig angeordneter Freiraum eine einzelne, im Durchmesser größere Lagerkugel aufnimmt. Diese Art von Einfüllstopfen ist zwar relativ aufwendig zu fertigen, erlaubt aber eine Wälzbewegung zwischen Füllstopfen und Wälzkörper im Bereich Einfüllöffnung.

Nach einem weiteren zusätzlichen Merkmal können die Wälzkörper entweder vollrollig oder durch ein Zwischenstück in Umfangsrichtung voneinander beabstandet angeordnet sein. Die vollrollige Anordnung der Wälzkörper ermöglicht eine besonders hohe Tragfähigkeit, während durch die eingeführten Zwischenstücke ein besonders ruhiger Lauf des Lagers realisiert ist.

Auch soll nach einem weiteren Merkmal der Erfindung die Einfüllöffnung im Durchmesser geringfügig größer als der Durchmesser der Wälzkörper sein. Durch diese unterschiedlichen Größenverhältnisse wird das Befüllen des Lagers mit dem Wälzkörpern vereinfacht.

Schließlich soll nach einem letzten Merkmal der Erfindung einer der Lagerringe mit einem Dichtelement versehen sein, das am zugehörigen anderen Lagerring unter Vorspannung anliegt.

Weitere Merkmale der Erfindung ergeben sich aus der nachfolgenden Beschreibung und aus den Zeichnungen, in denen ein Ausführungsbeispiel der Erfindung sowie zum Vergleich eine nicht beanspruchte Ausführungsform eines Lagers in vereinfachter Form dargestellt sind.

### Kurze Beschreibung der Zeichnungen

Es zeigen:
- Figur 1: einen Längsschnitt durch ein erfindungsgemäß ausgestal- tetes Schrägrollenlager,
- Figur 2: einen Längsschnitt durch ein nicht beanspruchtes Lager im Bereich der Einfüllöffnung,
- Figur 3: einen Längsschnitt durch das erfindungsgemäße Lager im Bereich der Einfüllöffnung,
- Figur 4: eine vergrößerte Darstellung einer Einzelheit aus Figur 3 und
- Figur 5: einen Längsschnitt durch ein Schrägrollenlager nach dem bisherigen Stand der Technik

### Ausführliche Beschreibung der Zeichnungen

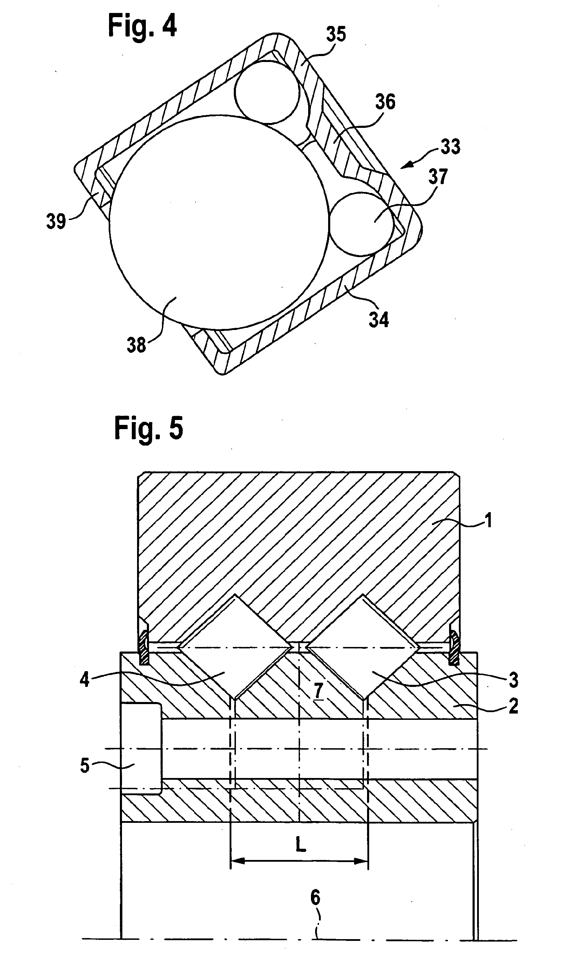

Zur Erläuterung des bisherigen Standes der Technik wird zunächst auf Figur 5 Bezug genommen. Das dort abgebildete zweireihige Schrägrollenlager besteht aus dem äußeren Lagerring 1 und dem inneren Lagerring 2, die konzentrisch um die Lagerachse 6 ineinander angeordnet sind. Zwischen beiden Lagerringen 1, 2 wälzen zylindrische Wälzkörper 3, 4 ab. Die Befüllung des Lagers mit den Wälzkörpern 3, 4 erfolgt derart, dass diese über eine nicht bezeichnete Einfüllöffnung im inneren Lagerring 2 dem Lager zugeführt werden. Nach dem Befüllvorgang wird die Einfüllöffnung mit dem Füllstopfen 7 verschlossen, der wiederum im inneren Lagerring 2 mit Hilfe der Befestigungsschraube 5 gesichert werden muss. Es liegt auf der Hand, dass bei einem größer werdenden Abstand L in axialer Richtung der beiden Wälzkörperreihen 3, 4 voneinander, der gemäß Figur 5 mit der Länge L definiert ist, sich auch der Füllstopfen 7 entsprechend anpassen muss. Hier setzt nun die Erfindung an, mit der eine Vereinfachung eines solchen Lagers erreicht werden soll.

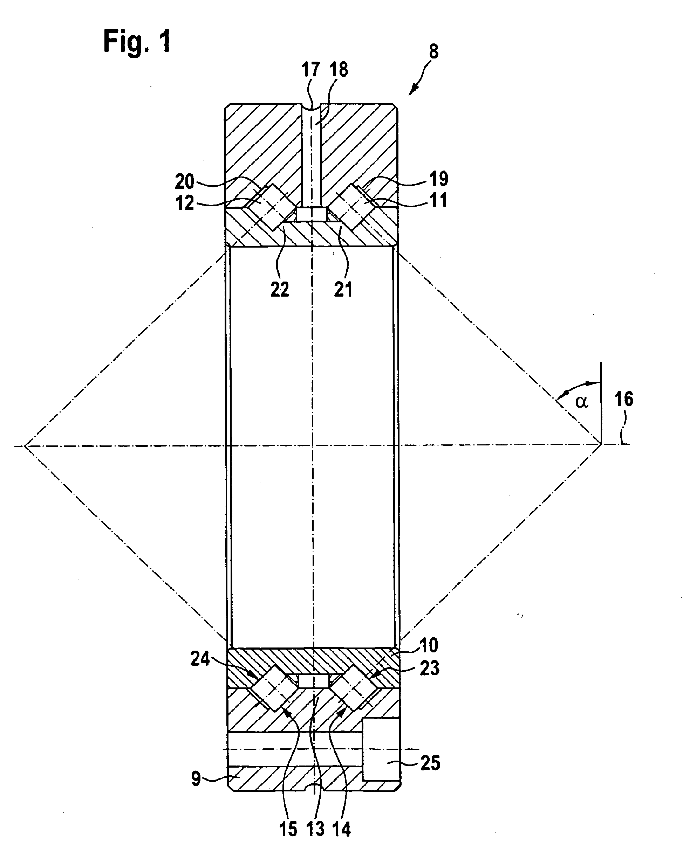

Wie aus Figur 1 ersichtlich, besteht das erfindungsgemäße Schrägrollenlager 8 aus dem äußeren Lagerring 9 und dem inneren Lagering 10, die konzentrisch ineinander angeordnet sind und zwischen sich einen Freiraum begrenzen, in dem die zylindrischen Wälzkörper 11, 12 vollrollig, d.h., ohne Käfig angeordnet sind. Der äußere Lagerring 9 ist einstückig ausgebildet und weist in seinem Mittelteil den dreieckförmigen Bereich 13 auf, der die Außenlaufbahnen 14, 15 trägt, die unter dem Winkel α geneigt zur Lagerachse 16 angeordnet sind. Der Mittelteil des äußeren Lagerringes 9 ist an seiner Mantelfläche mit der umlaufenden Schmierrille 17 versehen, von der wenigstens eine radiale Schmiermitteldurchtrittsbohrung 18 abzweigt. Wie weiter erkennbar, sind beide Wälzkörperreihen 11, 12 an ihren außenliegenden Stirnseiten durch einen festen Bord 19, 20 geführt, die vom äußeren Lagerring 9 gebildet sind. Beide Borde 19, 20 erstrecken sich im Ausführungsbeispiel über die gesamte Stirnfläche der zylindrischen Wälzkörper 11, 12 und sorgen so für deren exakte Führung. Der innere Lagerring 10 stellt naturgemäß die beiden Innenlaufbahnen 23, 24, die parallel zu den Außenlaufbahnen 14, 15 verlaufen. Darüber hinaus stellt der innere Lagerring 10 die beiden festen Borde 21, 22, die sich jedoch nur über einen Teil der inneren Stirnfläche der beiden Wälzkörperkränze 11, 12 erstrecken. Schließlich ist der äußere Lagerring 9 mit einer durchgehenden Befestigungsbohrung 25 zur Fixierung an einer Anschlusskonstruktion versehen.

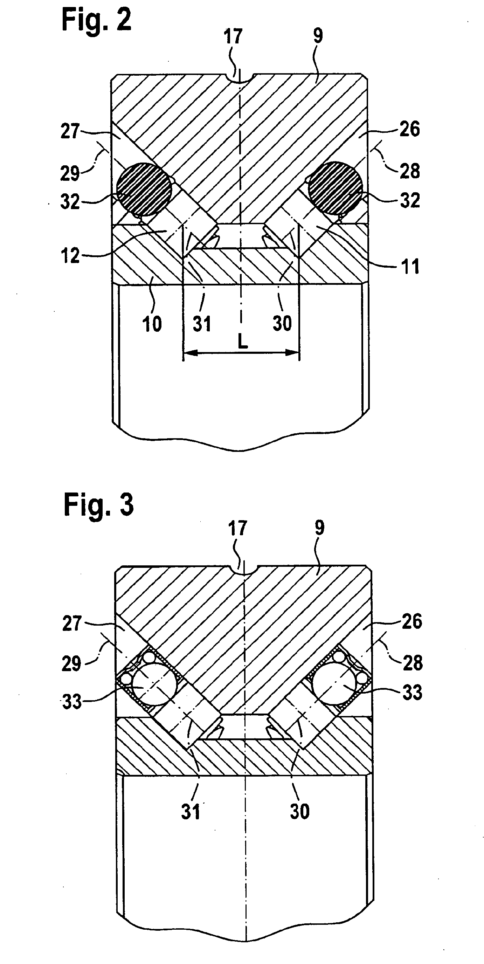

Die vergrößerte Darstellung in Figur 2 lässt erkennen, dass an einer Umfangsstelle der äußere Lagerring 10 rechts- und linksseitig mit je einer Einfüllöffnung 26, 27 versehen ist, deren Mittelachse 28, 29 mit der Rotationsachse 30, 31 der Wälzkörper 11, 12 fluchten. Es ist erkennbar, dass sich auf diese Weise das erfindungsgemäße Schrägrollenlager 8 in einfacher Weise von außen nach innen mit den Wälzkörpern 11, 12 befüllen lässt. Nachdem der Füllvorgang abgeschlossen ist, werden beide Einfüllöffnungen 26, 27 durch je eine Kunststoffkugel 32 verschlossen, die geringfügig im Durchmesser größer als die Einfüllöffnung 26, 27 ist. Auch hat es sich als vorteilhaft erwiesen, wenn der Durchmesser der Einfüllöffnung 26, 27 etwas größer als der Durchmesser der beiden zylindrischen Wälzkörper 11, 12 ist, weil sich dadurch das Befüllen des Lagers mit den Wälzkörpern 11, 12 vereinfacht. Der Figur ist auch zu entnehmen, dass der mit L bezeichnete axiale Abstand zwischen den beiden Wälzkörperreihen 11, 12 vom Füllstopfen in Form der Kunststoffkugel 32 nicht beeinflusst wird.

Der Unterschied zwischen den Figuren 2 und 3 besteht darin, dass die als Füllstopfen verwendete Kunststoffkugel 32 in Figur 2 durch ein Zentrierlager 33 in Figur 3 ersetzt ist. Wie insbesondere Figur 4 erkennen lässt, besteht dieses Zentrierlager 33 aus einer spanlos geformten Hülse 34, die an einem Ende durch den Boden 35 verschlossen ist, der eine mittige Erhebung 36 aufweist. Zwischen dieser Erhebung 36 und der Hülse 34 ist ein Kugelkranz 37 angeordnet, der eine im Durchmesser wesentlich größere Lagerkugel 38 trägt, die nach außen gegen Herausfallen aus der Hülse 34 durch einen Bördelbord 39 gesichert ist. Wie erkennbar, ist zwischen den Stirnflächen der Wälzkörper 11, 12 und der Kunststoffkugel 32 bei Rotation des Schräglagers 8 eine Gleitreibung gegeben, während gemäß Figur 3 eine rollende Reibung durch das Zentrierlager realisiert ist.

**Bezugszahlenliste**
- 1: äußerer Lagerring
- 2: innerer Lagerring
- 3: Wälzkörper
- 4: Wälzkörper
- 5: Befestigungsschraube
- 6: Lagerachse
- 7: Füllstopfen
- 8: Schrägrollenlager
- 9: äußerer Lagerring
- 10: innerer Lagerring
- 11: Wälzkörper
- 12: Wälzkörper
- 13: dreieckförmiger Bereich
- 14: Außenlaufbahn
- 15: Außenlaufbahn
- 16: Lagerachse
- 17: Schmierrille
- 18: Schmiermitteldurchtrittsbohrung
- 19: Bord
- 20: Bord
- 21: Bord
- 22: Bord
- 23: Innenlaufbahn
- 24: Innenlaufbahn
- 25: Befestigungsbohrung
- 26: Einfüllöffnung
- 27: Einfüllöffnung
- 28: Mittelachse
- 29: Mittelachse
- 30: Rotationsachse
- 31: Rotationsachse
- 32: Kunststoffkugel
- 33: Zentrierlager
- 34: Hülse
- 35: Boden
- 36: Erhebung
- 37: Kugelkranz
- 38: Lagerkugel
- 39: Bördelbord

- L: Abstand
- α: Neigungswinkel

## Patentansprüche

1. Zweireihiges Schrägrollenlager (8), welches aus einem äußeren Lagerring (9) und einem inneren Lagerring (10) sowie aus einer Anzahl zwischen den Lagerringen (9, 10) in zwei Reihen nebeneinander angeordneter zylindrischer Wälzkörper (11, 12) besteht, die zueinander in O-Anordnung angestellt sind und auf Laufbahnen (14, 15, 23, 24) abwälzen, welche unter einem Winkel geneigt zu einer Lagerachse (16) verlaufen, wobei jede Wälzkörperreihe (11, 12) mit einer außerhalb der Laufbahn (14, 15, 23, 24) liegenden Einfüllöffnung (26, 27) versehen ist, deren Mittelachse (28, 29) eine Verlängerung von Rotationsachsen (30, 31) der Wälzkörper (11, 12) ist und beide Einfüllöffnungen (26, 27) nach dem Einfüllen der Wälzkörper (11, 12) durch einen Füllstopfen (32, 33) verschlossen sind, **dadurch gekennzeichnet, dass** der Füllstopfen als ein spanlos gefertigtes Zentrierlager (33) ausgebildet ist, welches aus einer Hülse (34) besteht, deren Boden (35) einen Kugelkranz (37) aufnimmt, dessen mittig angeordneter Freiraum eine einzelne, im Durchmesser größere Lagerkugel (38) aufnimmt.

2. Zweireihiges Schrägrollenlager (8) nach Anspruch 1, **dadurch gekennzeichnet, dass** die Wälzkörper (11, 12) vollrollig oder durch ein Zwischenstück in Umfangsrichtung voneinander beabstandet angeordnet sind.

3. Zweireihiges Schrägrollenlager (8) nach Anspruch 1, **dadurch gekennzeichnet, dass** die Einfüllöffnung (26, 27) im Durchmesser geringfügig größer als der Durchmesser der Wälzkörper (11, 12) ist.

4. Zweireihiges Schrägrollenlager (8) nach Anspruch 1, **dadurch gekennzeichnet, dass** einer der Lagerringe (9, 10) mit einem Dichtelement versehen ist, das am zugehörigen anderen Lagerring (10, 9) unter Vorspannung anliegt.

## Claims

1. Double-row angular-contact roller bearing (8) which comprises an outer bearing ring (9), an inner bearing ring (10) and a number of cylindrical rolling bodies (11, 12) which are arranged in two rows next to one another between the bearing rings (9, 10), are set against one another in an O-arrangement and roll on raceways (14, 15, 23, 24) which extend inclined at an angle with respect to a bearing axis (16), each rolling-body row (11, 12) being provided with a filling opening (26, 27) which lies outside the raceway (14, 15, 23, 24) and the centre axis (28, 29) of which is an extension of rotational axes (30, 31) of the rolling bodies (11, 12), and both filling openings (26, 27) being closed by a filling plug (32, 33) after filling with the rolling bodies (11, 12), **characterized in that** the filling plug is configured as a centring bearing (33) which is produced without the removal of material and comprises a sleeve (34), the bottom (35) of which receives a ball race (37), the centrally arranged clearance of which receives a single bearing ball (38) of relatively large diameter.

2. Double-row angular-contact roller bearing (8) according to Claim 1, **characterized in that** the rolling bodies (11, 12) are arranged as a full set or spaced apart from one another in the circumferential direction by an intermediate piece.

3. Double-row angular-contact roller bearing (8) according to Claim 1, **characterized in that** the filling opening (26, 27) has a slightly larger diameter than the diameter of the rolling bodies (11, 12).

4. Double-row angular-contact roller bearing (8) according to Claim 1, **characterized in that** one of the bearing rings (9, 10) is provided with a sealing element which bears under prestress against the associated other bearing ring (10, 9).

## Revendications

1. Roulement à rouleaux oblique à deux rangées (8), qui se compose d'une bague de roulement extérieure (9) et d'une bague de roulement intérieure (10) ainsi que d'un certain nombre de corps de roulement cylindriques (11, 12) disposées les uns à côté des autres en deux rangées entre les bagues de roulement (9, 10), lesquels sont inclinés les uns par rapport aux autres suivant un agencement en O et roulent sur des pistes de roulement (14, 15, 23, 24), qui s'étendent avec une inclinaison suivant un angle par rapport à un axe du roulement (16), chaque rangée de corps de roulement (11, 12) étant pourvue d'une ouverture de remplissage (26, 27) située à l'extérieur de la piste de roulement (14, 15, 23, 24), l'axe médian (28, 29) de l'ouverture de remplissage étant un prolongement d'axes de rotation (30, 31) des corps de roulement (11, 12) et les deux ouvertures de remplissage (26, 27) étant fermées après le remplissage des corps de roulement (11, 12) par un bouchon de remplissage (32, 33), **caractérisé en ce que** le bouchon de remplissage est réalisé sous forme de support de centrage (33) fabriqué sans enlèvement de copeaux, qui se compose d'une douille (34), dont le fond (35) reçoit une couronne sphérique (37), dont l'espace libre disposé au milieu reçoit une bille de roulement (38) unique, de plus grand diamètre.

2. Roulement à rouleaux oblique à deux rangées (8) selon la revendication 1, **caractérisé en ce que** les corps de roulement (11, 12) sont disposés sans cage ou de manière espacée les uns des autres dans la direction périphérique par une pièce d'espacement.

3. Roulement à rouleaux oblique à deux rangées (8) selon la revendication 1, **caractérisé en ce que** l'ouverture de remplissage (26, 27) a un diamètre légèrement plus grand que le diamètre des corps de roulement (11, 12).

4. Roulement à rouleaux oblique à deux rangées (8) selon la revendication 1, **caractérisé en ce que** l'une des bagues de roulement (9, 10) est pourvue d'un élément d'étanchéité qui s'applique avec précontrainte contre l'autre bague de roulement associée (10, 9).
